## Europäisches Patentamt

(19) **European Patent Office**

**Office européen des brevets**

(11) Veröffentlichungsnummer: **0 161 466**
**B1**

(12) **EUROPÄISCHE PATENTSCHRIFT**

(45) Veröffentlichungstag der Patentschrift:
**28.12.88**

(21) Anmeldenummer: **85104123.6**

(22) Anmeldetag: **04.04.85**

(51) Int. Cl.⁴: **A 01 D 75/18, A 01 B 61/02**

(54) **Landwirtschaftliches Anbaugerät.**

(30) Priorität: **14.04.84 DE 3414208**

(43) Veröffentlichungstag der Anmeldung:
**21.11.85 Patentblatt 85/47**

(45) Bekanntmachung des Hinweises auf die Patenterteilung:
**28.12.88 Patentblatt 88/52**

(84) Benannte Vertragsstaaten:
**FR GB NL**

(56) Entgegenhaltungen:
**DE-A- 1 457 994**
**DE-A- 2 524 348**
**NL-C- 97 286**
**US-A- 2 304 421**
**US-A- 2 697 319**
**US-A- 2 697 617**

(73) Patentinhaber: **H. Niemeyer Söhne GmbH & Co. KG,**
**Heinrich-Niemeyer-Strasse 52, D-4446 Hörstel (DE)**

(72) Erfinder: **Ungruh, Josef, Birkhahnweg 7, D-4440 Rheine**
**(DE)**
Erfinder: **Tebbenhoff, Hermann, Dipl.-Ing.,**
**Napoleondamm 1, D-4447 Hopsten (DE)**

(74) Vertreter: **Busse & Busse Patentanwälte, Postfach 1226,**
**D-4500 Osnabrück (DE)**

## Beschreibung

Die Erfindung bezieht sich auf ein landwirtschaftliches Anbaugerät, insbesondere Mähwerk, in einer Ausbildung gemäss dem Oberbegriff des Anspruchs 1.

Bei einem bekannten Gerät dieser Art (DE-A-2 524 348) umfasst die Verriegelungsvorrichtung, die den Maschinenträger wahlweise in einer Quer- oder in einer Längsausrichtung zum Schlepper fixieren kann, als Hauptbauteil einen Schwenkhebel, der gelenkig am Maschinenträger angreift und mittels eines Schnappriegelbolzens über Rastbohrungen am Maschinenträger in zwei Schwenkstellungen festlegbar ist. Diese beiden Schwenkstellungen bestimmen die Quer- bzw. Längsausrichtung des Maschinenträgers zum Schlepper. Am Schwenkhebel einerseits und am Dreipunkttragwerk andererseits greift eine Verbindungsstrebe an, die zwischen dem Schwenkhebel und dem Dreipunkttragwerk auftretende Zugkräfte überträgt und darüber hinaus eine Überlastsicherung bildet. Die Verbindungsstrebe besteht dazu aus zwei Teilen, die gegeneinander über einen Sicherungsscherbolzen festgelegt sind.

Der Erfindung liegt die Aufgabe zugrunde, ein Anbaugerät der im Oberbegriff des Patentanspruchs 1 angegebenen Art mit einer Verriegelungsvorrichtung zu schaffen, die bei einfacher und gefahrloser Bedienbarkeit eine einfache, das Dreipunkttragwerk mit dem Maschinenträger direkt verbindende Baueinheit bildet, welche die Verriegelungs- und die Überlastfunktion in sich vereinigt.

Die Erfindung löst diese Aufgabe durch ein Anbaugerät mit den Merkmalen des Patentanspruchs 1. Hinsichtlich wesentlicher weiterer Ausgestaltungen wird auf die Ansprüche 2 bis 12 verwiesen.

Bei dem Anbaugerät nach der Erfindung findet zur Abstrebung des Maschinenträgers gegenüber dem Dreipunkttragwerk eine einzige Baueinheit in Gestalt der Zugstrebe Verwendung, welche die Ausrichtungsfunktion mit der Überlastsicherungsfunktion in sich vereinigt. Dies erleichtert die Montage und erlaubt es auch, Anbaugeräte nachträglich mit einer derartigen Verriegelungsvorrichtung auszustatten. Zum Umstellen des Anbaugerätes aus einer seiner Stellungen in die andere genügt ein durch Fernbedienung auch vom Schleppersitz aus mögliches Ausrücken des Schnappriegelbolzens, wonach bei durch die Dreipunkthydraulik des Schleppers ausgehobenem Anbaugerät dieses einfach und gefahrlos von Hand in die gewünschte andere Stellung überführt werden kann, bei deren Erreichen eine selbsttätige Verriegelung stattfindet. Stattdessen kann das Verschwenken des Anbaugerätes, sofern es auf dem Boden ruht, auch einfach durch Verfahrbewegungen eines das Anbaugerät abstützenden Schleppers herbeigeführt werden.

Bei einem bekannten landwirtschaftlichen Anbaugerät in Gestalt eines Messerbalkenmähwerkes (US-A-2 304 421), das in Seitenanbau an einem landwirtschaftlichen Schlepper anbringbar ist, ist das Mähwerk um 90° aus einer Querlage zum Schlepper in eine parallel zu diesem verlaufende Ausweichstellung verschwenkbar, wenn eine Überlastsicherung anspricht. In der Ausweichstellung ist keine Arretierung vorgesehen. Zum Transport des Mähwerkes wird dessen Messerbalken durch Hochklappen um eine zur Fahrtrichtung parallele Horizontalachse in eine aufrechte Lage überführt und in dieser arretiert.

Bei einer bekannten Anschlussvorrichtung (US-A-2 697 617) für ein variables Anhängen der Zugdeichsel eines Anhängefahrzeugs an ein Zugfahrzeug ist eine Verriegelungsvorrichtung mit Teleskopstreben sowie einem mit Rastbohrungen zusammenwirkenden Riegelbolzen vorgesehen. Diese Verriegelungsvorrichtung dient zur Vorgabe eines veränderlichen Anhängepunktes ohne Sicherungsfunktion gegen Überlast.

Ein Ausführungsbeispiel des Gegenstands der Erfindung ist in der Zeichnung näher veranschaulicht. In der Zeichnung zeigen:

Fig. 1 eine schematische Draufsicht auf ein als Mähwerk ausgebildetes Anbaugerät in Arbeitsstellung,

Fig. 2 eine Draufsicht ähnlich Fig. 1 zur Veranschaulichung des Anbaugerätes in Transportstellung,

Fig. 3 eine Draufsicht ähnlich Fig. 1 zur Veranschaulichung des Anbaugerätes in einer durch Ansprechen der Überlastsicherung eintretenden Zwischenstellung,

Fig. 4 eine Schnittdarstellung des Gerätes gemäss der Linie IV–IV in Fig. 1,

Fig. 5 eine vereinfachte Seitenansicht der Verriegelungsvorrichtung in Einzeldarstellung zur Veranschaulichung ihrer Teile in der Arbeitsstellung des Gerätes gemäss Fig. 1,

Fig. 6 einen Horizontalschnitt durch die Verriegelungsvorrichtung gemäss Fig. 5,

Fig. 7 eine Darstellung ähnlich Fig. 5 zur Veranschaulichung der Teile der Verriegelungsvorrichtung in der Zwischenstellung gemäss Fig. 3,

Fig. 8 einen Horizontalschnitt durch die Verriegelungsvorrichtung gemäss Fig. 7,

Fig. 9 eine Darstellung ähnlich Fig. 5 zur Veranschaulichung der Teile der Verriegelungsvorrichtung in der Transportstellung des Anbaugerätes gemäss Fig. 2,

Fig. 10 einen Horizontalschnitt durch die Verriegelungsvorrichtung gemäss Fig. 9,

Fig. 11 einen Schnitt durch die Verriegelungsvorrichtung nach der Linie XI–XI in Fig. 5, und

Fig. 12 einen Schnitt durch die Verriegelungsvorrichtung nach der Linie XII–XII in Fig. 5.

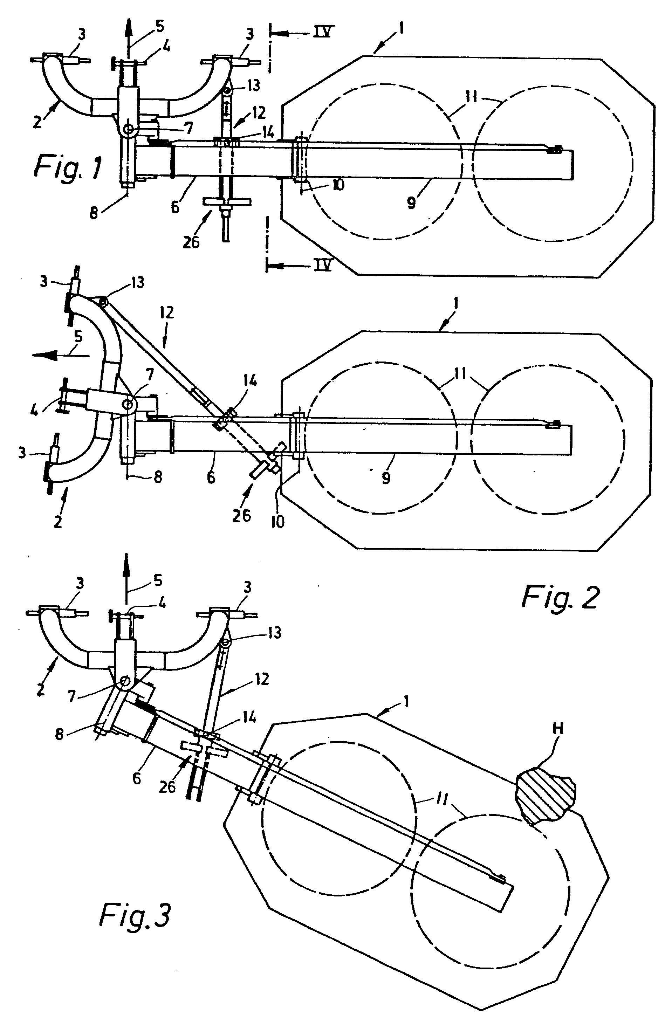

Die Fig. 1 bis 3 veranschaulichen ein landwirtschaftliches Anbaugerät 1, das als Mähwerk ausgebildet ist, jedoch auch irgendeinen anders gestalteten Funktionsteil besitzen kann. Das Gerät 1 umfasst ein Dreipunkttragwerk 2, das mit Anschlusspunkten 3, 4 für eine Verbindung mit der Dreipunkthydraulik eines nicht dargestellten landwirtschaftlichen Schleppers versehen ist. Die Schlepperfahrtrichtung veranschaulichen jeweils die Pfeile 5.

An der in Fahrtrichtung 5 rückwärtigen Seite ist das Tragwerk 2 mit einem Maschinenträger 6 gelenkig verbunden, der bei dem dargestellten Beispiel um eine Hochachse 7 sowie weiterhin um eine horizontale, die Hochachse 7 senkrecht schneidende Klappachse 8 schwenkbar ist. Der Maschinenträger 6 bildet bei dem dargestellten Gerätebeispiel einen Zwischenträgerbalken, an dessen Ende ein Hauptgeräteträgerbalken 9 um eine horizontale, zur Klappachse 8 parallele Achse 10 schwenkbar angelenkt ist. Kreiselmähwerkzeuge sind bei 11 durch ihre Arbeitsweise angedeutet.

Zur Fixierung des Maschinenträgers 6 in einer Querausrichtung zur Schlepperfahrtrichtung 5, in der das Gerät 1 seine Arbeitsstellung in Seitenauslage zum Schlepper gemäss Fig. 1 einnimmt, ist eine Verriegelungsvorrichtung 12 vorgesehen, die über Anschlussgelenke 13 am Tragwerk einerseits und 14 am Maschinenträger 6 andererseits angreift. Diese Verriegelungsvorrichtung 12 dient zugleich dazu, den Maschinenträger 6 auch in einer Längsausrichtung zur Schlepperfahrtrichtung 5 zu fixieren, in der gemäss Fig. 2 das Gerät 1 eine Transportstellung hinter dem Schlepper einnimmt. Schliesslich dient die Verriegelungsvorrichtung 12 auch noch als Überlastsicherung, die dem Gerät 1 z.B. bei Anfahren eines Hindernisses H Gelegenheit gibt, in eine Zwischenstellung auszuweichen, wie sie beispielsweise in Fig. 3 veranschaulicht ist.

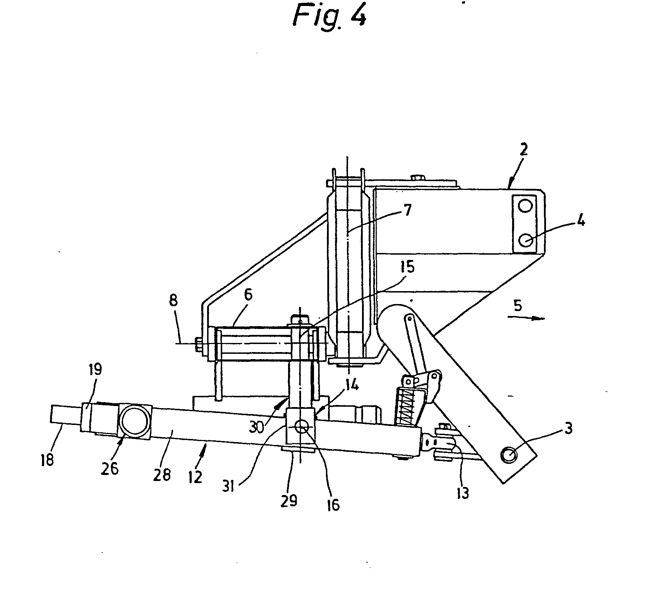

Wie der Fig. 4 näher entnommen werden kann, ist die Verriegelungsvorrichtung 12 am Tragwerk 2 über ein Kugelgelenk 13 und am Maschinenträger 6 über ein Doppelgelenk 14 angeschlossen, wobei das Doppelgelenk 14 eine Hochachse 15 und eine diese senkrecht schneidende Querachse 16 als Gelenkachsen aufweist. Dies ermöglicht es dem Maschinenträger 6, in Arbeitsstellung nach Bedarf um die Achse 8 Schwenkbewegungen auszuführen, ohne durch die Verriegelungsvorrichtung 12 dabei behindert zu werden. Ferner kann die Verriegelungsvorrichtung 12 jene Lageveränderungen vornehmen, die beim Umstellen aus der Arbeitsstellung gemäss Fig. 1 in die Transportstellung gemäss Fig. 2 bzw. beim Übergang in eine Zwischenstellung gemäss Fig. 3 notwendig sind.

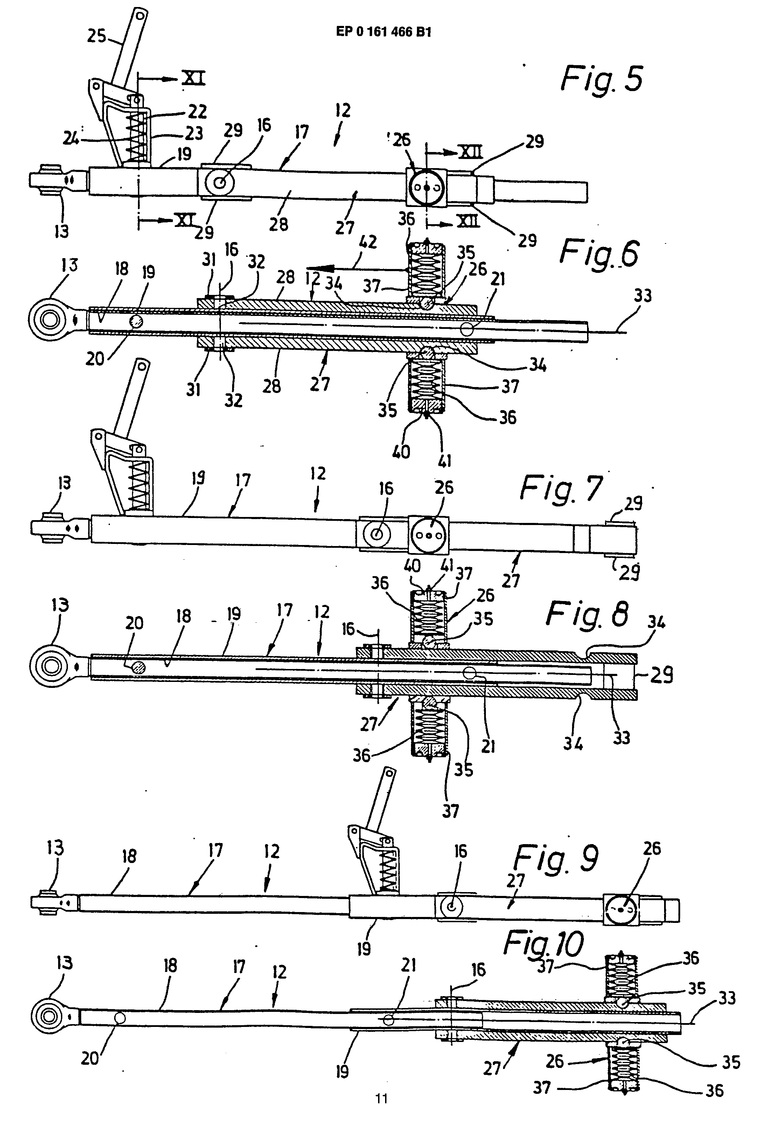

Wie den Fig. 5 bis 12 näher entnommen werden kann, umfasst die Verriegelungsvorrichtung 12 eine Zugstrebe 17, die bei dem dargestellten Beispiel als Teleskoprohr ausgebildet ist und ein Innenrohr 18, welche als erstes Strebenteil bei 13 am Tragwerk 2 angreift, und ein Aussenrohr 19 umfasst, das als zweites Strebenteil über das Doppelgelenk 14 am Maschinenträger 6 abgestützt ist.

Das Innenrohr 18 ist mit Rastbohrungen 20, 21 versehen, und das Aussenrohr 19 trägt im Bereich seines vorderen Endes einen ausrückbaren Schnappriegelbolzen 22, der in einem Trägerstück 23 gegen die Wirkung einer Druckfeder 24 verschieblich und mittels eines z.B. durch ein Zugseil fernbetätigbaren Auslösehebels 25 od.dgl. ausrückbar auf dem Aussenrohr 19 abgestützt ist. Der Schnappriegelbolzen 22 durchgreift Durchgangsbohrungen im Aussenrohr 19 und in Arbeitsstellung des Gerätes 1 die Rastbohrung 20 bzw. in Transportstellung des Gerätes 1 die Rastbohrung 21 im Innenrohr 18.

Die Verriegelungsvorrichtung 12 umfasst ferner eine Rastvorrichtung 26 als Überlastsicherung, auf die des näheren weiter unten noch eingegangen wird.

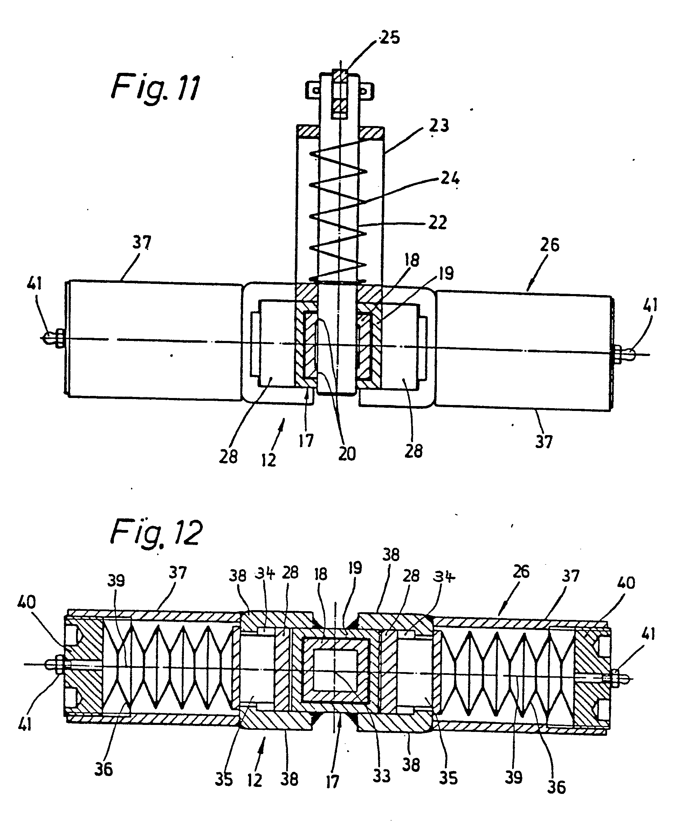

Befindet sich die Verriegelungsvorrichtung 12 zur Fixierung des Gerätes 1 in seiner Arbeitsstellung gemäss Fig. 1 in der Stellung seiner Teile gemäss Fig. 5 und 6, so genügt es für ein Umstellen in die Transportstellung gemäss Fig. 9 und 10, den Schnappriegelbolzen 23 aus seiner Einraststellung in der Rastbohrung 20 zu lösen, wonach das Gerät von Hand oder durch Verfahrbewegungen des Schleppers in seine Transportstellung um die Hochachse 7 verschwenkbar ist. Bei Erreichen dieser Transportstellung fällt der Schnappriegelbolzen 22 durch die Druckwirkung seiner Druckfeder 24 dann selbsttätig in die Rastbohrung 21 ein, womit das Gerät 1 in seiner Transportstellung gesichert ist. In gleicher Weise erfolgt die umgekehrte Umstellung des Gerätes 1 aus der Transportstellung in die Arbeitsstellung.

Das Aussenrohr 19 ist in einem über das Doppelgelenk 14 am Maschinenträger 6 abgestützten Käfig 27 verschieblich gelagert und dabei gegen Verschiebebewegungen durch die Rastvorrichtung 26 gesichert. Der Käfig 27 umfasst im wesentlichen zwei Seitenschienen 28, welche sich entlang dem Aussenrohr 19 erstrecken, ober- bzw. unterseitig durch Zwischenverbindungsstücke 29 im Bereich ihrer vorderen und rückwärtigen Enden verbunden sind und zwischen sich das Aussenrohr 19 führend aufnehmen. Der Käfig 27 ist über das Doppelgelenk 14 am Maschinenträger 6 abgestützt, und zwar mittels einer Gabel 30, die als Ganzes um die Hochachse 15 drehbar ist und mittels Gelenkbolzen 32, welche die Querachse 16 definieren und von Gabelschenkeln 31 einwärts vorstehen, gelenkig an den Seitenschienen 28 angreift.

Die Seitenschienen 28 des Käfigs 27 weisen an ihrer Aussenseite einander diametral zur Längsmittelachse 33 des Aussenrohrs 19 gegenüberliegende Rastkerben 34 auf, in die je ein Federrastbolzen 35 der als Doppel-Rastvorrichtung 26 ausgebildeten Überlastsicherung eingreifen. Jeder der Federrastbolzen 35 ist durch eine Druckfeder 36 in Eingriffsrichtung belastet, die in einem diese aufnehmenden Gehäuse 37 untergebracht ist. Die Gehäuse 37 sind durch Verbindungsstücke 38 mit der Ober- und der Unterseite des Aussenrohrs 19 verbunden, die in dem Bereich zwischen den Verbindungsstücken 29 für die Seitenschienen 28 des Käfigs 27 freiliegen.

Die Mittelachsen 39 der Gehäuse 37 der Rastvorrichtung 26 fluchten miteinander und sind parallel zur Querachse 16 des Doppelgelenkes 14 ausgerichtet. Die Druckfedern 36 für die Federrastbolzen 35 sind jeweils durch eine das Aussenende der Gehäuse 37 verschliessende Stellschraube 40 in ihrer Druckvorspannung veränderbar, und jedem Gehäuse 37 ist ein Schmiernippel 41 zugeordnet, der bei dem dargestellten Beispiel die Stellschraube 40 durchgreift und dazu dient, den Gehäuseinnenraum für eine Dauerschmierung mit Schmierfett zu füllen.

Trifft ein in seiner Arbeitsstellung gemäss Fig. 1 befindliches Gerät 1 auf ein Hindernis H, so können bei entsprechendem Widerstand die Federrastbolzen 35 aus ihrer im Normalzustand in die Rastkerben 34 eingreifenden Stellung ausrasten mit der Folge, dass sich die Zugstrebe 17 gemäss Fig. 7 und 8 in Pfeilrichtung 42 in Fig. 6 in der Zeichnung nach links verschieben kann, wodurch sich der Abstand zwischen den Anschlussgelenken 13, 14 vergrössert, das Gerät 1 eine Zwischenlage z.B. gemäss Fig. 3 annimmt und Zerstörungen am Gerät 1 vermieden werden, die sonst bei Anfahren eines Hindernisses H entstehen könnten.

Nach Passieren eines Hindernisses kann die Arbeitsstellung des Gerätes leicht dadurch wiederhergestellt werden, dass bei auf dem Boden abgesenktem Gerät dieses durch Manövrieren des Schleppers wieder um die Hochachse 7 in die Arbeitsstellung zurückbewegt wird, in der dann wieder die Federrastbolzen 35 in die Rastkerben 34 einfallen.

**Patentansprüche**

1. Landwirtschaftliches Anbaugerät, insbesondere Mähwerk (1), mit einem Dreipunkttragwerk (2), einem mit diesem zumindest um eine Hochachse (7) schwenkbar verbundenen Maschinenträger (6) und einer Verriegelungsvorrichtung (12), die den Maschinenträger (6) wahlweise in einer Quer- oder in einer Längsausrichtung zum Schlepper fixiert und eine gelenkig am Tragwerk (2) angreifende Zugstrebe (17) sowie einen ausrückbaren Schnappriegelbolzen (22) umfasst, der mit Rastbohrungen (20, 21) zusammenwirkt, wobei die Zugstrebe (17) mehrteilig ausgebildet ist, eine Rastvorrichtung (26) als Überlastsicherung aufweist und bei Überlast durch Ausziehen längenveränderbar ist, dadurch gekennzeichnet, dass die Zugstrebe (17) über ein Gelenk (14) unmittelbar am Maschinenträger (6) angreift, an ihrem ersten Strebenteil (18) die Rastbohrungen (20, 21) aufweist und an ihrem zweiten, gegenüber dem ersten längsverschieblichen Strebenteil (19) den Schnappriegelbolzen (22) trägt, und dass die Zugstrebe (17) mit ihrem zweiten Strebenteil (19) längsverschieblich in einem über das Gelenk (14) am Maschinenträger (6) abgestützten Käfig (27) gelagert und durch die Rastvorrichtung (26) gesichert ist.

2. Gerät nach Anspruch 1, dadurch gekennzeichnet, dass die Zugstrebe (17) als an sich bekanntes Teleskoprohr ausgebildet ist, dessen Innenrohr (18) die Rastbohrungen (20, 21) aufweist und dessen Aussenrohr (19) der Schnappriegelbolzen (22) zugeordnet ist.

3. Gerät nach Anspruch 2, dadurch gekennzeichnet, dass der Schnappriegelbolzen (22) gegen die Wirkung einer Druckfeder (24) verschieblich und mittels eines fernbetätigbaren Auslösehebels (25) od.dgl. ausrückbar auf dem Aussenrohr (19) abgestützt ist.

4. Gerät nach einem oder mehreren der Ansprüche 1 bis 3, dadurch gekennzeichnet, dass das erste Strebenteil (18) mittels eines Kugelgelenks (12) am Tragwerk (2) angreift.

5. Gerät nach einem oder mehreren der Ansprüche 1 bis 4, dadurch gekennzeichnet, dass die Zugstrebe (17) über ein Doppelgelenk (14) am Maschinenträger (6) abgestützt ist, das eine Hochachse (15) und eine diese senkrecht schneidende Querachse (16) als Gelenkachsen aufweist.

6. Gerät nach Anspruch 1 und 5, dadurch gekennzeichnet, dass das Doppelgelenk (14) den Käfig (27) am Maschinenträger (6) abstützt.

7. Gerät nach einem oder mehreren der Ansprüche 1 bis 6, dadurch gekennzeichnet, dass die Rastvorrichtung (26) zwei je durch eine Druckfeder (36) belastete, in Rastkerben (34) auf der Aussenseite des Käfigs (27) eingreifende, dem zweiten Strebenteil (19) mitbeweglich zugeordnete Federrastbolzen (35) umfasst.

8. Gerät nach Anspruch 7, dadurch gekennzeichnet, dass die Federrastbolzen (35) einander diametral zur Längsmittelachse (33) des zweiten Strebenteils (19) gegenüberliegen, jeweils in einem ihre Druckfeder (36) aufnehmende Gehäuse (37) abgestützt sind.

9. Gerät nach Anspruch 8, dadurch gekennzeichnet, dass die Gehäuse (37) der Rastvorrichtung (26) mit dem zweiten Strebenteil (19) fest verbunden sind und der Käfig (27) zwei einander gegenüberliegende, die Gehäuse untergreifende Seitenschienen (28) aufweist, in deren Aussenseite Rastkerben (34) für die Federrastbolzen (35) vorgesehen sind.

10. Gerät nach einem oder mehreren der Ansprüche 6 bis 9, dadurch gekennzeichnet, dass die gemeinsame Mittelachse (39) der Gehäuse (37) der Rastvorrichtung (26) parallel zur Querachse (16) des Doppelgelenkes (14) ausgerichtet ist.

11. Gerät nach einem oder mehreren der Ansprüche 6 bis 10, dadurch gekennzeichnet, dass die Druckfedern (36) für die Federrastbolzen (35) durch je eine das Aussenende der Gehäuse (37) verschliessende Stellschrauben (40) in ihrer Druckvorspannung veränderbar sind.

12. Gerät nach einem oder mehreren der Ansprüche 8 bis 11, dadurch gekennzeichnet, dass jedem Gehäuse (37) ein Schmiernippel (41) zugeordnet ist.

**Claims**

1. A mounted agricultural implement, particularly a mower (1), having a three-point supporting means (2), an equipment carrier (6) connected to this at least for pivoting about a vertical axis (7) and a locking device (12) which locates the equipment carrier (6) selectively in a transverse or in a longitudinal alignment with the tractor and comprises a tie bar (17) acting articulately on the supporting means (2) as well as a releasable spring catch (22) which cooperates with detent bores (20, 21), the tie bar (17) being of multiple-part construction, comprising a detent device (26) as an overload safety device and being variable in length by drawing out in the event of an overload, characterised in that the tie bar (17) acts directly on the equipment carrier (6) through a joint (14), comprises the detent bores (20, 21) in its first bar portion (18) and carries the spring catch (22) on its second bar portion (19) which is longitudinally displaceable in relation to the first, and in that the tie bar (17) is mounted by its second bar portion (19) for longitudinal displacement in a cage (27) supported on the equipment carrier (6) through the joint (14) and is secured by the detent device (26).

2. An implement according to claim 1, characterised in that the tie bar (17) is constructed in the form of a telescopic tube known per se, the inner tube (18) of which comprises the detent bores (20, 21) and the outer tube (19) of which is associated with the spring catch (22).

3. An implement according to claim 2, characterised in that the spring catch (22) is displaceable against the action of a compression spring (24) and is supported on the outer tube (19) for release by means of a remote-controlled release lever (25) or the like.

4. An implement according to any one or more of claims 1 to 3, characterised in that the first bar portion (18) acts on the supporting means (2) by means of a ball joint (13).

5. An implement according to any one or more of claims 1 to 4, characterised in that the tie bar (17) is supported on the equipment on the equipment carrier (6) via a double joint (14) which has a vertical axis (15) and a transverse axis (16) intersecting this perpendicularly as joint axes.

6. An implement according to claims 1 and 5, characterised in that the double joint (14) supports the cage (27) on the equipment carrier (6).

7. An implement according to any one or more of claims 1 to 6, characterised in that the detent device (26) comprises two spring detent pins (35), each of which is located by a compression spring (36) and which engage in detent notches (34) at the outside of the cage (27) and are associated with the second bar portion (19) for joint movement therewith.

8. An implement according to claim 7, characterised in that the spring detent pins (35) are situated diametrically opposite one another in relation to the longitudinal central axis (33) of the second bar portion (19) and are each supported in a housing (37) receiving their compression spring (36).

9. An implement according to claim 8, characterised in that the housings (37) of the detent device (26) are rigidly connected to the second bar portion (19) and the cage (27) comprises two lateral rails (28) which are situated opposite one another and engage under the housings and in the outsides of which there are provided detent notches (34) for the spring detent pins (35).

10. An implement according to any one or more of claims 6 to 9, characterised in that the common central axis (39) of the housings (37) of the detent device (26) is aligned parallel to the transverse axis (16) of the double joint (14).

11. An implement according to any one or more of claims 6 to 10, characterised in that the compression springs (36) for the spring detent pins (35) are each adjustable in their prestressing by means of a setscrew (40) closing the outer end of the housing (37).

12. An implement according to any one or more of claims 8 to 11, characterised in that a lubricating nipple (41) is associated with each housing (37).

**Revendications**

1. Appareil agricole porté, notamment une faucheuse (1) avec une ossature porteuse à trois points (2) relié à elle, un support de machine (6) articulé pour pivoter autour d'un axe vertical (7) et un dispositif de verrouillage (12) qui permet au support de machine (6) d'être fixé à volonté dans une position transversale ou en ligne avec le tracteur et qui comprend un tirant (17) en prise sur l'ossature porteuse (2) par une articulation ainsi qu'un goujon de verrouillage encliquetable (22), qui coopère avec des trous d'arrêt (20, 21), le tirant étant constitué de plusieurs pièces, qui présente un dispositif d'arrêt (26) comme sécurité vis-à-vis de la surcharge et est allongeable par étirement sous l'effet d'une surcharge, caractérisé en ce que le tirant (17) est en prise directement sur le support de machine (6) par l'intermédiaire d'une articulation (14), il présente sur sa première partie de tirant (18) les trous d'arrêt (20, 21) et sur sa deuxième partie de tirant (19) qui peut coulisser en longueur par rapport à la première, il porte le goujon de verrouillage encliquetable (22), et que le tirant (17) avec sa deuxième partie de tirant (19) est logé en glissement longitudinal dans une cage (27) en appui sur le support de machine (6) par l'intermédiaire de l'articulation (14) et est assuré par le dispositif d'arrêt (26).

2. Appareil selon la revendication 1, caractérisé en ce que le tirant (17) est conformé en tube télescopique connu en soi, dont le tube interne (18) présente des trous d'arrêt (20, 21) et dont le tube externe (19) porte le goujon de verrouillage encliquetable (22).

3. Appareil selon la revendication 2, caractérisé en ce que le goujon de verrouillage encliquetage (22) est supporté par le tube externe (19) qu'il peut se déplacer sous l'effet d'un ressort de compression (24) et est débrayable au moyen d'un levier de déclenchement (25) ou analogue manœuvrable à distance.

4. Appareil selon une ou plusieurs des revendications 1 à 3, caractérisé en ce que la première pièce du tirant (18) est en prise sur l'ossature porteuse (2) au moyen d'une rotule (13).

5. Appareil selon l'une ou plusieurs des revendications 1 à 4, caractérisé en ce que, le tirant (17) est en appui sur le support de machine (6) par l'intermédiaire d'une double articulation (14), qui comporte un axe vertical (15) et un axe transversal (16) qui lui est perpendiculaire comme axes d'articulation.

6. Appareil selon une ou plusieurs des revendications 1 et 5, caractérisé en ce que la double articulation (14) relie la cage (27) au support de machine (6).

7. Appareil selon l'une ou plusieurs des revendications 1 à 6, caractérisé en ce que le dispositif d'arrêt (26) comprend deux goujons d'arrêt à ressort (35) solidaires de la deuxième partie de tirant (19) pour être mobilie avec elle, qui sont soumis, chacune à la pression d'un ressort de compression (36) et qui viennent s'engager dans des encoches cylindriques d'arrêt sur la face externe de la cage (27).

8. Appareil selon la revendication 7, caractérisé en ce que les goujons d'arrêt à ressort (35) se trouvent diamétralement opposés par rapport à l'axe longitudinal (33) de la deuxième partie de tirant (19), chacun est en appui dans un boîtier (37) recevant son ressort de compression (36).

9. Appareil selon la revendication 8, caractérisé en ce que les boîtiers (37) du dispositif d'arrêt (26) sont liés solidement à la deuxième partie de tirant (19) et la cage (27) présente deux rails latéraux (28) situés face à face qui sont enserrés par les boîtiers, et dans les faces externes desquels des encoches cylindriques d'arrêt (14) sont ménagées pour les goujons d'arrêt à ressort (35).

10. Appareil selon une ou plusieurs des revendications 6 à 9, caractérisé en ce que l'axe médian commun (39) des boîtiers (37) du dispositif d'arrêt (26) est dirigé parallèlement à l'axe transversal (16) de la double articulation (14).

11. Appareil selon une ou plusieurs des revendications 6 à 10, caractérisé en ce que la charge de chaque ressort de compression (36) des goujons d'arrêt à ressort (35) est réglable par une vis de réglage (40) fermant l'extrémité de chaque boîtier (37).

12. Appareil selon une ou plusieurs des revendications 8 à 11, caractérisé en ce que chaque boîtier (37) est muni d'un graisseur (41).

*Fig. 1*

*Fig. 2*

*Fig.3*

# Fig. 4

Fig. 5

Fig. 6

Fig. 7

Fig. 8

Fig. 9

Fig. 10

Fig. 11

Fig. 12